# EUROPÄISCHE PATENTANMELDUNG

(11) **EP 0 670 559 A2**
(43) Veröffentlichungstag der Anmeldung: **06.09.1995**
(21) Anmeldenummer: 95102941.2
(22) Anmeldetag: 02.03.1995
(51) Int. Cl.: G06T 7/00

(54) **Echtzeit-Bildverarbeitungssystem, insbesondere als PC-Zusatzsystem**

(30) Priorität: 05.03.1994 DE 4407376
(71) Anmelder: AUTRONIC Gesellschaft für Bildverarbeitung und Systeme mbH, D-76229 Karlsruhe (DE)
(72) Erfinder: Hubal, Winfried, D-76307 Karlsbad (DE); Nepstad, Thomas, D-71634 Ludwigsburg-Eglosheim (DE)
(74) Vertreter: Hofmann, Gerhard, Dipl.-Ing. Patentassessor

(57) **Zusammenfassung**

Ein flexibel einsetzbares Echtzeit-Bildverarbeitungssystem ist in schneller Hardware auf wenigen, jeweils nur einen PC-Slot beanspruchenden Karten (13) mit je einem aufsteckbaren Modul (12) für eine pipeline-strukturierte, ikonische Filterung und Merkmalsextraktion sowie mit je einem Signalprozessor (8) realisiert. Die Hardware für die Filterung und Objektsegmentierung im Modul (12) ist weitgehend aus feldprogrammierbaren integrierten Standard-Logikschaltungen aufgebaut, um die Bildverarbeitung mit der selben Hardware über bloße Parameter-Konfigurierung unterschiedlichen Aufgabenstellungen anpassen zu können. Noch im Rahmen dieser Hardware-Vorverarbeitung des Moduls (12) wird aus der zeilenweisen Längencodierung ein Zusammenwachsen von Objektstrukturen erkannt. Wenigstens einer der Module (12) trägt auch eine Videoeingangsstufe (16), aus der über einen Broadcast-Bus (25) alle Module (12) parallel mit den digitalisierten Videodaten (21) gespeist werden, um gleichzeitig nach sehr unterschiedlichen Mustern suchen zu können, die dann eigenständige Beiträge zur softwaremäßigen Klassifizierung liefern. Für diese sind die Karten-Prozessoren (8) über transputerähnliche Punkt-zu-Punkt-Verbindungen zu einem parallel arbeitenden Prozessornetz (28) miteinander verknüpft. Dessen Rechenleistung für die Objektanalyse zur Merkmalsklassifikation ist durch zusätzlich eingesteckte Karten (13) steigerbar, die nur mit weiteren ins Netz (28) eingebundenen Prozessoren (8) bestückt sind, aber nicht mit weiteren Vorverarbeitungs-Modulen (12).

## Beschreibung

Die Erfindung betrifft ein Echtzeit-Bildverarbeitungssystem gemäß dem Oberbegriff des Anspruches 1.

Systeme gattungsgemäßer Art, wie eines etwa beschrieben ist in dem Beitrag "Hoher Datentransfer als Ziel" von K. Bavendiek in ELEKTRONIK JOURNAL 7/93, Seiten 28-35, weisen für die Bildauswertung zeitparallel betriebene Prozessoren auf, bei denen schon die Videodaten im Wege des Broadcasting auf alle Prozessoren eines Transputernetzwerkes verteilt werden. Neben der ikonischen Bildverarbeitung (bei der im Gegensatz zur reinen Merkmalsverarbeitung die volle Graubildinformation ausgewertet wird) erfolgt dort eine Musterauswertung in den vernetzten Prozessoren ausschließlich durch paralleles Abarbeiten von vorgegebener Auswertesoftware für die Merkmalsextraktion und für die daraus abzuleitende Objektklassifizierung.

VME-bus-Systeme mit Pipeline-Verarbeitung der Videodaten sind an sich auch in der Lage, die anfallenden Videoinformationen in Echtzeit zu verarbeiten. Aber der Zentralprozessor, der dort sowohl für die Ablaufsteuerung wie auch für die Datenauswertung eingesetzt wird, bedingt einen beschränkten und fest vorzugebenden Funktionsumfang; und im Vergleich zu modernen PC-Systemen ist der Einsatz der VME-Systeme für viele Bildverarbeitungsaufgaben im Bereiche der Fertigungssteuerung und der Qualitätsprüfung zu unwirtschaftlich. Derzeit verfügbare PC-Systeme andererseits weisen für den praktischen Einsatz den Nachteil auf, trotz des Aufwandes von mehreren Einsteckkarten für die ikonische Videodaten-Vorverarbeitung und für deren Musterauswertung nicht die erforderliche Vielfalt von extrahierten Merkmalen für die Echtzeit-Videodatenanalyse mit anschließender Klassifizierung insbesondere durch Polynomklassifikatoren und neuronale Netze gewährleisten zu können.

Vor allem aber werden die bisher verfügbaren parametrierbaren Bildverarbeitungssysteme gattungsgemäßer oder gattungsähnlicher Art in ihrer Echtzeit-Arbeitsweise über Betriebssystem-Interrupts gestört. Deshalb ist es nicht ohne weiteres möglich, einen einzigen Prozessor sowohl für die Steuerung der ikonischen Bildverarbeitung (einschließlich ihrer Anpassung an unterschiedliche Aufgabenstellungen) wie auch für die Auswertung zur Musterklassifikation, und zwar beides im Echtzeitbetrieb, einzusetzen.

Als Kompromiß wurde schon ein Multi-Ikonik-Weg (viele Filtermodule und die Merkmalsextraktion arbeiten als Pipeline, die einen Auswerteprozessor speist) oder aber stattdessen der Multi-Prozessor-Weg (Prozessornetzwerke, realisiert beispielsweise mit Transputerchips, werden von der Videoquelle gespeist, um mit parallel arbeitender Software die Musterauswertung zu betreiben) eingeschlagen. Komplexe Mustererkennungsaufgaben lassen sich aber damit nicht mehr im Echtzeitbetrieb realisieren, weil die Kommunikationsleistung der Prozessoren untereinander beschränkt ist.

Demgegenüber liegt vorliegender Erfindung die technische Problematik zu Grunde, zur Einsparung von Hardware-Aufwand bei gleichzeitiger Steigerung der Echtzeit-Verarbeitungskapazität ein flexibel einsetzbares Bildverarbeitungssystem zu realisieren.

Diese Aufgabe ist erfindungsgemäß im wesentlichen dadurch gelöst, daß das gattungsgemäße Bildverarbeitungssystem auch die Merkmale des Kennzeichnungsteils des Anspruches 1 aufweist.

Nach dieser Lösung sind mit einem reduzierten Hardwareaufwand die Vorteile der bisher getrennt realisierten Multi-Ikonik- und Multi-Prozessor-Bildverarbeitungslösungen in dem Sinne kombiniert, daß in einer ersten funktionalen und hardwaremäßigen Schicht vor einem Prozessornetz eine ikonische Pipeline-Bildverarbeitung samt anschließender Merkmalsextraktion parallelisierbar sind, worauf dann die Morkmalsklassifizierung mit Multiprozessor-Algorithmen folgt. Pipelineähnliche Verarbeitungen kommen nun also nur noch innerhalb der parallel betreibbaren Module im Bereiche der ikonischen Bildverarbeitung vor, nicht mehr zwischen den Modulen und vor allem nicht mehr zwischen Modulen und Auswerteprozessoren. Das ergibt eine übersichtliche und hardwaremäßig optimierbare Struktur, zumal die einzelnen, parallel arbeitenden Module (für das separate Abarbeiten jeweils einer Aufgabenstellung an die ikonische Bildverarbeitung der vollen Videoinformation) nicht mehr über den Engpaß eines Zentralbus betrieben werden. Stattdessen ist eine Eingangs-Broadcastingstruktur zur Speisung aller parallel betriebener Module kombiniert mit einer sehr schnellen ausgangsseitigen Punkt- zu Punkt-Kommunikation zwischen den Prozessoren der einzelnen PC-Einsteckkarten (gleichgültig ob sie mit oder ohne den Vorverarbeitungs-Modul bestückt sind), die nach der Digitalisierung der Bildinformation hinsichtlich unterschiedlicher Filterkriterien (einem je Modul) dann, nach der Merkmalsextraktion, für die Objektanalyse zusammenarbeiten. Abgesehen von dieser software-gesteuerten Objektanalyse im Netzwerkverbund arbeitet jeder Prozessor für sich als Steuerung für die Datenverwaltung in ihm vorgeschalteten Filter- und Segmentier-Modul.

So kann auf wenigen, jeweils mit einem schnellen Signalprozessor und erforderlichenfalls mit Filtermodulen bestückten, Basiskarten die gesamte Hardware von der Kamaraeingangsstufe über die ikonische Bildverarbeitung (jeweils mit Merkmalsextraktion) bis zu den vernetzten Auswerteprozessoren vereinigt werden. Die auf die parallel arbeitenden Module kaskadierte, intern jeweils einen pipelineförmigen Datenstrom führende Bildverarbeitung wird also nach der Merkmalsextraktion aus den ikonisch gefilterten, zuvor digitalisierten Videodaten in einem Prozessornetz vollendet, das ähnlich der Architektur mit Transputer-Links über punktuelle Hochgeschwindigkeitskanäle verknüpft und so zur quasi-parallelen Übernahme einer Vielzahl gleichzeitig gewonnener Objektinformationen geeignet ist. Die ikonische Bildverarbeitung, also die Videodaten- und Merkmalsreduktion kann aus dem PC heraus mittels Konfigurationsdateien von Diskette oder Festplatte der aktuellen Aufgabenstellung flexibel angepaßt werden, indem auf den einzelnen Modulen feldprogrammierbare standardisierte integrierte Logikbausteine (FPGAs) und Speicherbänke nach Maßgabe abgelegter, aufgabenbezogener Parametersätze für dieselbe vorliegende Hardware unterschiedlich konfiguriert werden.

Auch die der Filterung zur Datenreduktion folgende Merkmalsextraktion erfolgt noch in Hardware auf den parallel arbeitenden Modulen. Dafür werden die in der letzten Stufe der ikonischen Bildverarbeitung erzeugten Lauflängencodes zur Segmentierung einem Objektcodierer übertragen, um (unter Berücksichtigung zusammenwachsender Objekte) an zusammenhängende Objektteile individuelle Objektcodes zu vergeben.

Für eine Kontrastanhebung der Objekte im Graubild dienen verschiedene Filteralgorithmen bei zwischen aktuellen und zwischengespeicherten Bildzeilen durchzuführenden Nachbarschaftsoperationen.

Um die nachträgliche Segmentverarbeitung bei der Objektanalyse möglichst einfach zu gestalten, erkennt bereits die Hardware-Objektsegmentierung Anfang und Ende eines Objektes bzw. das Zusammenwachsen ursprünglich getrennt erfaßter Objektteile. Während der Lauflängencode die Eigenschaften von aufeinanderfolgenden Bildpunkten längs einer Pixelzeile einer Zeilen- oder einer Matrix-Kamera hinsichtlich der Grauwerte innerhalb gleicher Schwellen (multilevel-run-length-code) sowie gleicher Nachbarschaftscharakteristiken auf verschiedene Objektarten beschreibt, dient die Objektsegmentierung der Identifikation zusammenhängender solcher Objekte in Richtung und senkrecht zur Richtung der Pixelzeilen. Hierfür repräsentiert bereits ein Längencode einen Zeilenteilblock gleicher Objektcharakteristik. Da in benachbarten Zeilen aneinanderstoßende Teilblöcke gleicher Charakteristik definitionsgemäß dem selben Objekt zugehören, brauchen für die Objektsegmentierung nicht mehr alle Pixel untersucht zu werden, sondern nur ihre bereits erfolgte Zusammenfassung zu Teilblöcken, die durch Objektcode-Zuweisungen individualisiert sind; so daß schließlich nur eine Liste aus Längen- und Objektcodes in eindeutiger Zuordnung zueinander abzulegen ist. Das ermöglicht eine rasche Objektverwaltung und damit eine zeitgünstige Objektanalyse in der abschließenden Softwareverarbeitung, etwa durch Momentenberechnung (Fläche, Ort, Drehlage,Formfaktor) oder über neuronale Netze, im Netzwerk der parallel betriebenen Basiskarten-Prozessoren.

So ist eine flexible Echtzeit-Bildverarbeitung geschaffen, die insbesondere auch den strengen Anforderungen in den Bereichen der Oberflächenprüfung und der berührungslosen Vermessung genügt. Da die Hardware-Karten die gesamte Auswertung und Klassifikation übernehmen, kann der PC zur Ergebnisverwaltung (z. B. Statistik) und zur Produktionssteuerung eingesetzt werden.

Zusätzliche Alternativen und Weiterbildungen sowie weitere Merkmale und Vorteile der Erfindung ergeben sich aus den weiteren Ansprüchen und, auch unter Berücksichtigung der Darlegungen in der abschließenden Zusammenfassung, aus nachstehender Beschreibung eines in der Zeichnung unter Beschränkung auf das Wesentliche mittels Blockschaltbildern stark abstrahiert skizzierten bevorzugten Realisierungsbeispiels zum erfindungsgemäßen, kompakten und schnellen Bildverarbeitungssystem. In der Zeichnung zeigt:
- Fig. 1: Basiskarten für PC-ISA-Steckanschlüsse, mit und ohne Aufsteck-Module für die hardwaremäßige Bildinformationsvorverarbeitung,
- Fig. 2: das Prinzip des Kamera-Abgleichs in der Video-Eingangsstufe eines der Aufsteck-Module nach Fig. 1,
- Fig. 3: das Prinzip der Informationsfilterung und Mustermerkmalsextraktion in jedem der Aufsteck-Module nach Fig. 1,
- Fig. 4: das Prinzip der Objektsegmentierung als Abschluß der hardwaremäßigen Merkmalsextraktion, vor Übergabe der vorverarbeiteten Bildinformation an die zur Software-Objektanalyse direkt untereinander vernetzten Prozessoren auf den Einsteckkarten (mit und ohne Aufsteck-Module),
- Fig. 5: das Prinzip der Objektcode-Zuordnung bei der zeilenweise Aufeinanderfolge definierter Grauwertteilblöcke gemäß Fig. 4 und
- Fig. 6: das Prinzip der Objektcode-Zuordnung bei zusammenwachsenden Objektteilen.

Das in der Zeichnung skizzierte Hardware-Echtzeitbildverarbeitungssystem ermöglicht die Vorverarbeitung der Videoinformationen 11, die eine Filterung bis zur Segmentierung der aufgenommenen Objekt-Videodaten umfaßt. Diese schnelle Hardware-Vorverarbeitung ist im Prinzip auf einer einzigen (PC)-Einsteckkarte 13 mit aufgestecktem Verarbeitungsmodul 12 realisierbar. Für Parallele Auswertung der aktuellen Videoinfornationen 11 gemäß unterschiedlichen Filter- und/oder Segmentierkriterien werden einfach mehrere Module 12 parallel betrieben. Grundsätzlich können auf einer Karte 13 mehrere Module 12 übereinander gesteckt sein und auf den selben Signalprozessor 8 arbeiten. Zweckmäßiger ist es jedoch, pro Basiskarte 13 mit ihrem Prozessor 8 nur einen aufsteckbaren Modul 12 vorzusehen. Die softwaremäßige Weiterverarbeitung dieser von den Modulen 12 an die Prozessoren 8 gelieferten Segmentierungsdaten erfährt dann eine Nachbearbeitung in den vernetzten Prozessoren 8 der Karten 13, nämlich softwaremäßig zur Objektanalyse (etwa hinsichtlich Schwerpunktslage, Momenten und Drehlage eines durch die Objektsegmentierung isolierten Musters).

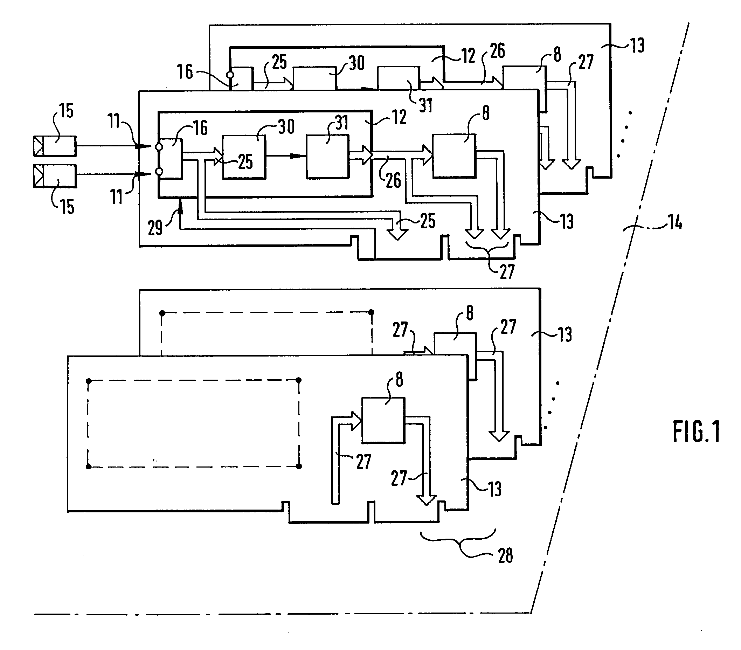

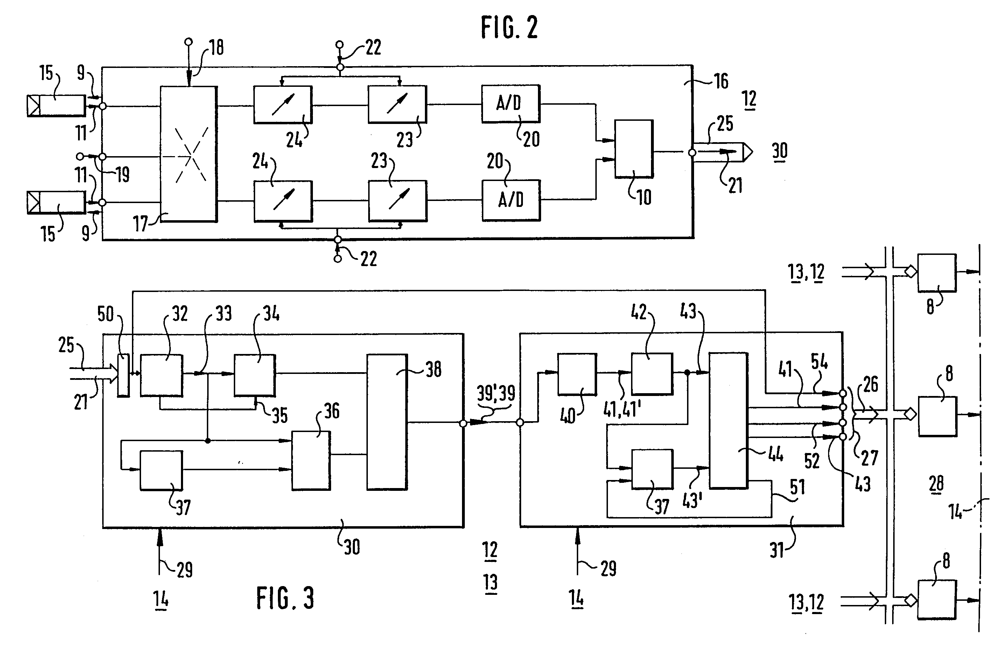

Wenigstens eine Kamera 15 (Fig. 1) speist mit ihren noch analogen Videoinformationen 11 eine Video-Eingangsstufe 16 in einem der Module 12 auf einer der Einsteckkarten 13. Aus logistischen Gründen sind alle Module 12 gleich ausgestattet, also jeder auch mit einer Video-Eingangsstufe 16 versehen. Wenn z. B. mehr als zwei Kameras 15 für eine Objekterfassung erforderlich sind, oder wenn zwischen Paaren von Kameras 15 sehr unterschiedlicher Charakteristik rasch umgeschaltet werden soll, stehen die auf dem selben Broadcasting-Bus 25 arbeitenden weiteren Eingangsstufen 16 dafür zur Verfügung. Die gerade wirksame Eingangsstufe 16 liefert Synchronisier- und Steuerbefehle 9 für die Arbeitsweise an ihre Videokameras 15 zurück. Bei Speisung aus einer Zeilenkamera 15 beinhaltet die Stufe 16 ausgangsseitig auch einen Multiplexer 10 für die zeitliche Verschränkung der Informationen 11 aus den beiden Kamerakanälen. Außerdem ist die Stufe 16 mit einem Kalibrierschalter 17 (Fig. 2) ausgestattet. Der wird von einem, etwa aus dem Modul 12 selbst gelieferten, Kalibriersignal 18 zu Betriebsbeginn, und danach erforderlichenfalls in größeren zeitlichen Abständen periodisch, angesteuert, um ein vorgegebenes Kalibriersignal 19 der Eingangsstufe 16 aufzuschalten. Grundsäztlich kann über den Kalibrierschalter 17 auch wechselweise jeweils das eine Analogsignal 11 in den anderen Videokanal eingespeist werden. Wenn während der Kalibrierung beide Kameras 15 das gleiche Objekt - vorzugsweise eine ungemusterte Fläche mittlerer Grautönung - erfassen, dann müßten von den Ausgängen beider Kanäle der Eingangsstufe 16 übereinstimmende digitalisierte Videodaten 21 an das nachfolgende Filter 30 ausgegenben werden. Insoweit das noch nicht der Fall ist, werden (aufgrund der aktuellen gegenseitigen Abweichungen der Videodaten 21 voneinander) mittels eines Kalibrierprogrammes vom Prozessor 8 Abgleichinformationen 22 generiert. Mit diesen wird im jeweiligen Kanal der Video-Eingangsstufe 16 der vor dem A/D-Wandler 20 liegende Dunkelabgleich 23 für jeden der beiden Kanäle übereinstimmend auf das dunkelste Pixel in der aktuellen Videoinformation 11 adaptiert. Außerdem bewirken die eingespeisten Abgleichinformationen 22 vor diesem Dunkelabgleich 23 einen Pegelabgleich 24, der für die Empfindlichkeitscharakteristik der jeweils angeschlossenen Kamera eine Pegelkorrektur und außerdem einen Verstärkungsabgleich der beiden Kanäle untereinander beinhaltet.

Diese Kalibrierung der Video-Eingangsstufe 16 erfolgt also vollautomatisch, ohne manuelle Einstellerfordernisse oder Zuhilfenahme besonderer Labormeßmittel. Aus dem Prozessor 8 desjenigen Moduls 12, dessen Eingangsstufe 16 für den Anschluß der Kameras 15 benutzt wird, erfolgt so per Software eine Funktionsprüfung mit wechselseitigem Abgleich nach Maßgabe der momentan gegebenen Kameracharakteristiken samt Protokollierung dieser Kalibrierung der Eingangsstufe 16. Wenn diese Kalibrierung schon in der Fertigungsphase anhand typischer Kamerasätze geschieht, dann werden zweckmäßigerweise gleich kameraspezifische Kalibrierparameter gewonnen und in nichtflüchtigen Halbleiterspeichern (EEPROMs) auf dem Modul 12 abgespeichert, aus denen später bei der Betriebsaufnahme nach Maßgabe des eingesetzten Kameratyps eine Auswahl erfolgt, um den Kalibriervorgang zu beschleunigen.

Die im Bildaufnahme-Betrieb dann von der Eingangsstufe 16 ausgegebenen digitalisierten Videodaten 21 stellen einen sehr mächtigen Datenstrom dar, da in ihnen zunächst noch die aktuellen Grauwerte (Helligkeitspegel) sämtlicher Pixel der jeweiligen Matrix- oder Zeilenkamera 15 enthalten sind. Um Zeitengpässe bei der Echtzeit-Vorverarbeitung hinsichtlich unterschiedlicher Verarbeitungskriterien zur Mustererkennung zu vermeiden, wird dieser Datenstrom mittels eines Speise-Bus 25 über einen standardisierten Broadcast-bus durch Flachband-Kabelverbindungen an der Oberseite der Karten 13 parallel auf alle Module 12 kaskadiert. Die Verarbeitung besteht in einer Filterung mit anschließender drastischer Reduktion des Datenstroms ohne Verlust relevanter Informationen. Die softwaregesteuerte Auswertung der gefilterten Bilddaten 26 mit ihren bereits extrahierten Muster-Merkmalen (vgl. unten) erfolgt über Punkt- zu Punkt-Hochgeschwindigkeitskanäle 27 (vorzugsweise in TMS 320C40- oder in Transputer-Architektur) in den untereinander vernetzten Prozessoren 8 der Karten 13. Dieses Prozessornetz 28 kann zur Steigerung der Rechenleistung durch Prozessoren 8 von zusätzlich (ohne Modul) eingesteckten Karten 13 ausgebaut werden, wie in Fig.1 unten berücksichtigt.

Für die Realisierung der konkret vorliegenden von unterschiedlich möglichen ikonischen Bildverarbeitungsaufgaben durch die über den Bus 25 parallel gespeisten Module 12 sind diese mit feldprogrammierbaren integrierten Standard-Gatterschaltungen (FPGAs, field-programable-gate-arrays) und Speicherbausteinen ausgestattet. Diese können hinsichtlich der die aktuelle Aufgabenstellung charakterisierenden Muster-, Filter-, und Zähl-Kriterien und dergleichen unmittelbar für den aktuellen Einsatz aus dem PC 14 heraus, mittels einer Konfigurationsinformation 29 an die vorhandenen Module 12, programmiert, also hardwaremäßig parametrisiert werden. So können mit ein und derselben Hardware für die Verarbeitungsmodule 12 nach Maßgabe einer Programmbibliothek für die jeweiligen Koeffizientensätze (Konfigurationsinformationen 29) sehr unterschiedliche ikonische Bildverarbeitungsaufgaben unter im übrigen übereinstimmenden Verarbeitungs-Randbedingungen ohne Erfordernis von Schaltungsänderungen durchgeführt werden.

Die beiden wesentlichen Funktionen, die auf jedem Verarbeitungsmodul 12 im Zuge der ikonischen Bildverarbeitung durchgeführt werden, sind in der Zeichnung (Fig. 3) durch ein Datenfilter 30 und einen ihm nachgeschalteten Merkmalsextraktor 31 veranschaulicht. Wie für den konkreten Beispielsfall einer Überprüfung der Oberfläche von Parkett- oder Profilbrettern auf gütebestimmende Fehlstellen in der deutschen Patentanmeldung P 43 15 202.3 vom 07.05.1993 (auf die hier zur Vermeidung von Wiederholungen voll-inhaltlich Bezug genommen wird) näher beschrieben, wird in dem Datenfilter 30 zunächst der eingespeiste, noch vollständige Datenstrom der digitalisierten Videodaten 21 gemäß vorwählbaren Kriterien reduziert; etwa indem eine Pixelzeile in gleiche Abschnitte unterteilt und aus jedem Abschnitt nur das bezüglich der vorliegenden Aufgabenstellung markanteste (etwa: das strahlungsintensivste) Pixel - jedes dieser ausgewählten Pixel aber weiterhin mit dem vollen Digitalisierungsumfang - vom Selektor 32 als pixelreduzierter Datenstrom 33 zur Weiterverarbeitung ausgegeben wird. Vor dem Selektor 32 kann noch eine Shading-Korrektur 50 zum Ausgleich inhomogener Beleuchtungsgegebenheiten auf dem von den Kameras 15 erfaßten Objekt erfolgen. Um die Reduktion auf dem pixelreduzierten Datenstrom 33 stets an den aktuellen Verhältnissen zu orientieren, kann der Selektor 32 auch adaptiv arbeiten, etwa orientiert an der aus einem Histogramm gewonnenen Häufigkeitsverteilung der Grauwerte in der aktuell von einer Kamera 15 erfaßten Bildzeile.

Der reduzierte Datenstrom 33 wird sodann in einer Schwellwertstufe 34 auf repräsentative Grauwerte in der gerade von der Kamera 15 erfaßten Pixelzeile analysiert. Für diese Art einer Oberflächeninspektion spricht die Schwellwertstufe 34 auf, aufgabenspezifisch über die Konfigurationsinformationen 29 vorgebbare, Helligkeits- und/oder Farb-Intensitäten an, vorzugsweise adaptiv gesteuert nach Maßgabe der aktuell ermittelten mittleren Grauwertstatistik aus dem vorgeschalteten Selektor 32 mittels einer Schwellensteuerung 35.

Parallel dazu wird eine Gradientenstufe 36 mit dem pixelreduzierten Datenstrom 33 der aktuell von einer Kamera 15 erfaßten Pixelzeile gespeist, um (wie in der vorstehend zitierten älteren Patentanmeldung näher beschrieben) über eine dreistellige Bewertungsmatrix eine Kantendetektion des Grauwertwechsels zu bewirken und damit eine Information darüber zu erhalten, ob bezüglich der Betrachtungs-Richtung längs der Pixelzeile ein im Datenstrom 33 enthaltener Intensitätssprung gerade den Anfangs- oder den Endrand eines Musters darstellt. Die gleiche Analyse erfolgt für jedes Pixel quer zur aktuellen Zeilenrichtung, wofür die Grauwertinformationen der vorangegangenen Zeilen in einem Zeilenspeicher 37 bereitgehalten sind.

Eine Verknüpfungsstufe 38 faßt die von der Schwellwertstufe 34 und von der Gradientenstufe 36 gelieferten aktuellen Kriterien über Farben (Intensitäten) und Anfang bzw. Ende ihrer Ausdehnungen binär zusammen, um dieses Resultat (der ikonischen Bildverarbeitung im Datenfilter 30) als weiter bitreduzierte ikonische Zeileninformation 39 an die zweite wesentliche Verarbeitung des jeweiligen Moduls 12, an den Merkmalsextraktor 31 zu übergeben.

Der Merkmalsextraktor 31 arbeitet zunächst als Längencodierer 40, um die binären Daten der Stufe 38 einer weiteren Datenreduktion zu unterwerfen. Gemäß Fig. 4a kann der vom Längencodierer 40 ausgegebene Längencode 41 für das als Beispiel dargestellte Binärbild einer bitreduzierten ikonischen Zeileninformation 39 die Längen der einzelnen Ketten aufeinanderfolgender gleicher binärer Merkmalsinformationen beinhalten, so daß jeweils die Anzahl aufeinanderfolgender Pixel übereinstimmender Grauwertinformation (Null oder Eins für dunkel oder hell) weiterverarbeitet wird. Eine Vereinfachung in der Darstellung des Längencodes 41 ergibt sich noch, wenn einer der beiden verbliebenen Grauwerte als Hintergrund definiert und demgegenüber nur noch z. B. die Anfangsposition und die Länge der jeweils ununterbrochenen Kette der anderen Grauwertinformation abgelegt wird, bevorzugt der dunklen Grauwerte gegenüber dem hellen Grauwerthintergrund. In diesem Falle bedeuten die Zahlenpaare Anfangsposition und Länge des vom Hintergrund abweichenden binären Grauwertes (Fig. 4a, unten).

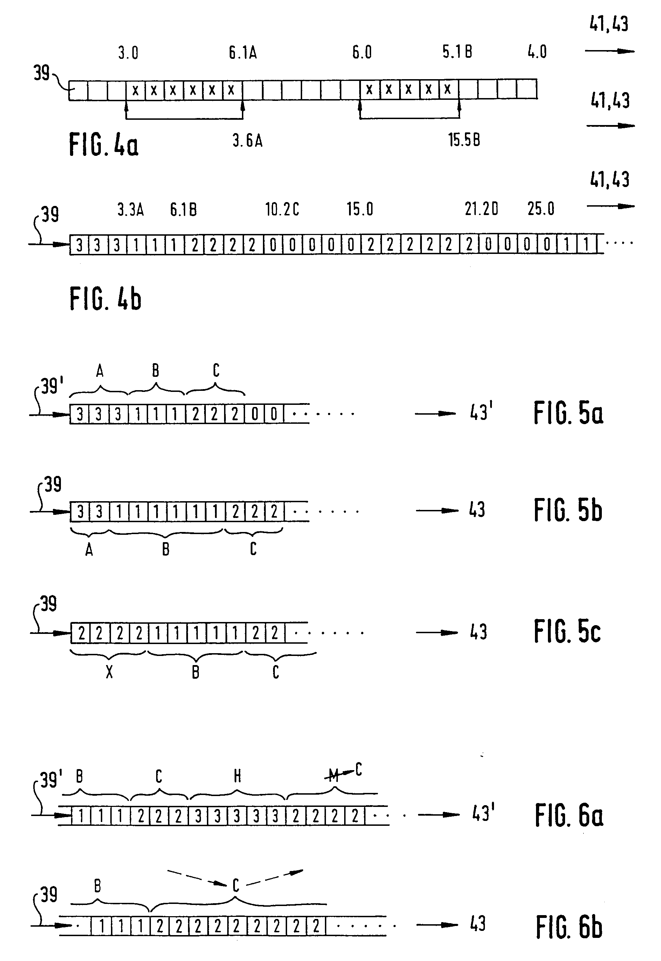

Für den Fall, daß nicht nur zwei sondern mehr Grauwertstufen bzw. deren Differentialquotienten (einfachkeitshalber als Objektfarben bezeichnet) berücksichtigt werden sollen, ist das im später weiterzuverarbeitenden Längencode 41 zu berücksichtigen. Gemäß Fig. 4b werden dazu je Pixelzeile (Zeileninformation 39) zweckmäßigerweise nur die absoluten Positionen des letzten Pixels vor einem Pixel mit davon abweichendem Grauwert, sowie der zum genannten letzten Pixel gehörige Grauwert, abgelegt. Beim Realisierungsbeispiel gemäß Fig. 4b diene der schwächste Grauwert (weiß) wieder als Referenz- oder Hintergrundinformation, eine schwache Grautönung habe die Identifikation 1, eine dunkle Grautönung die Identifikation 2 und der Schwarzwert die Identifikation 3. Dadurch ergibt sich für den Längencode die in Fig. 4b eingetragene Folge von Zahlenpaaren, die dem Längencode 41 für die binäre Grauwerterfassung in Fig. 4a - oben - entspricht; entsprechend könnte die reduzierte Information gemäß Fig. 4a - unten - auch hier Anwendung finden.

Ein Objektcodierer 42 ordnet jedem Längencode 41 einer Zeileninformation 39, der sich vom Grauwert-Hintergrund abhebt und deshalb ein für die aktuelle Merkmalssuche interessierendes Objekt sein könnte, einen individuellen Objektcode 43 zu, der in der Zeichnung zur Vereinfachung der Darstellung in großen Buchstaben ausgedrückt ist. Eine ununterbrochen aufeinanderfolgende Kette von übereinstimmenden Grauwertinformationen ist also in einem individuellen Objektcode 43 zusammengefaßt. Die nächste, sich daran in derselben Zeile anschließende Folge untereinander gleicher (anderer) Grauwertinformationen (die sich vom Hintergrund abhebt) erhält einen individuellen anderen Objektcode 43, der für die weitere Verarbeitung einfach dem zugehörigen Längencode angehängt wird. Der Objektcode 43 der aktuell ausgewerteten Pixelzeile wird außerdem in einem Zeilenspeicher 37 zum Vergleich mit der nächstfolgenden gepuffert.

Ein Verknüpfer 44, der mit den Objektcodes 43, 43' der aktuellen und der zurückliegenden Zeileninformation 39, 39' gespeist wird, erfaßt sodann das Anwachsen des jeweiligen Objekts in Richtung quer zu den Pixelzeilen, wie in Anlehnung an die Darstellung von Fig. 4 in Fig 5 und Fig. 6 veranschaulicht. Wenn und insoweit also die einander zugeordneten Pixel zweier aufeinanderfolgender Zeileninformationen, nämlich der zurückliegenden Zeileninformation 39' und der aktuellen Zeileninformation 39, übereinstimmende Objektcodes 43', 43 aufweisen, wird dieser Objektcode 43' = 43 auch für die aktuelle Zeileninformation 39 beibehalten (Fig. 5b), andernfalls wird ein neuer Objektcode 43 ("X" in Fig. 5c) generiert. Wenn allerdings ("C" in Fig. 6b) in der aktuellen Zeileninformation 39 ein bestimmter Objektcode 43 sich so sehr ausgebreitet hat, daß er mindestens zwei dem identischen Grauwert zugeordnete unterschiedliche Objektcodes 43' in der zurückliegenden Zeileninformation 39' ("C" und "M" in Fig. 6a) berührt, dann ist das ein Indiz dafür, daß eine geometrische Objektstruktur U- oder V-förmig zusammengewachsenen ist, und der abweichende Objektcode 43'in den zurückliegenden Zeileninformationen 39' wird rückwirkend angepaßt (Korrektur von "M" in "C" in Fig. 6a). Diese Korrektur berücksichtigt also nachträglich, daß Objektteile eines im Grunde einheitlichen Objektes sich nach früher schon abgespeicherten Zeileninformationen 39 hin verästelt hatten, wofür nun (gesteuert über den Verknüpfer 44) die im Massenspeicher 37 noch bereitgehaltenen alten Zeileninformationen 39 der Reihe nach abgerufen, hinsichtlich des betroffenen Objektcodes 43 angeglichen und über einen Pfad 51 wieder abgespeichert werden. Dadurch treten in den nachfolgenden Zeilen die schon ersetzten Objektcodes nicht mehr auf. Das reduziert die Objektverwaltung für weitere Objektbetrachtungen vom nachfolgenden Prozessor 8 auf einfach verkettete Objektlisten.

Diese am Ende des Merkmalsextrators 31 stattfindende sogenannte Objektsegmentierung ist nicht unbedingt darauf beschränkt, daß die Fortschreibung eines schon vorhandenen Objektcodes 43 sich nur auf die quer zur alten Pixelzeile anschließende Pixel der aktuellen Zeile erstreckt. Eine noch eindeutigere Objektverfolgung durch Vermeidung von Figurenunterbrechungen ergibt sich nämlich, wenn auch diagonal sich anschließende Pixel gleichen Grauwertes noch in die Fortschreibung des gleichen Objektcodes 43' einbezogen werden.

Die so aus den Einzelzeilen zum Gesamtbild gewonnen Objektcodes 43 werden zusätzlich zum beleuchtungskorrigiert digitalisierten Graubilddatenstrom 54 vom Ausgang der Shading-Korrektur 50 über einen weiteren der Hochgeschwindigkeitskanäle 27 zur Software-Auswertung an das Prozessornetz 28 übergeben, um die durch die Objektnummern des Objektcodes 43 individualisierten geometrischen Gebilde unter Grauwertberücksichtung einer Software-Objektanalyse zu unterwerfen und daraus etwa Qualitätsinformationen zur automatischen Fertigungssteuerung zu gewinnen.

Der Verknüpfer 44 liefert als Ergebnis die Objektcodes 43, 43' sowie Verknüpfungsanweisungen 52, welche zusammen mit der längencodierten Zeileninformation 41 über einen Hochgeschwindigkeitskanal 27 an den Prozessor 8 übertragen werden.

Aufgrund der Verknüpfungsanweisungen 52 verwaltet der Prozessor 8 Beschreibungslisten für jedes erkannte Objekt. Sie beinhalten alle Zwischenergebnisse, die für die Momentenberechnung notwendig sind. Wird ein Objekt durch eine Verknüpfungsanweisung beendet, stehen unmittelbar danach alle Momentenergebnisse des abgeschlossenen Objektes zur Verfügung, was dem Echtzeitverhalten des beschriebenen Systems zuträglich ist. Wird die Verbindung von mehreren Objektcodes über eine Verknüpfungsanweisung signalisiert, werden von Prozessor 8 nur noch die für die Momentenberechnung relevanten Zwischenergebnisse aufsummiert. Eine Rückverfolgung in den vorangegangenen Objektcodelisten kann hierdurch entfallen.

## Patentansprüche

1. Echtzeit-Bildverarbeitungssystem, insbesondere als PC-Zusatzsystem, mit einer Video-Eingangsstufe (16) für wenigstens eine Matrix- oder Zeilenkamera (15),
**dadurch gekennzeichnet**,
daß jeweils eine Karte (13) mit einem schnellen Singalprozessor (8) ausgestattet und mit einem Aufsteck-Modul (12) ausstattbar ist, wobei in dem Modul (12) die gesamte einlaufende Videoinformation (11/12) einer pipelinestrukturierten Hardware-Vorverarbeitung zur ikonischen Filterung und Merkmalsextraktion unterworfen ist, ehe sie den Prozessor (8) speist, mit Kaskadierarbeit mehrerer Karten (13) für komplexe Mustererkennungs-Anforderungen, wobei dann die digitalisierten Videodaten (21) über einen Broadcast-Bus (25) in die Filterung hinsichtlich unterschiedlicher Bildauswertkriterien je einzelnem Modul (12) parallel eingespeist objektsegmentierte Datenstrom, bestehend aus Verknüpfungsanweisungen (52), Objektcodes (43) und Längencodes (41), sowie der ihm zugrundeliegende Graubilddatenstrom (54) aus jedem Modul (12) über Hochgeschwindigkeitskanäle (27) und den Prozessor (8) seiner Karte (13) an ein Prozessornetz (28) ausgegeben wird, das transputerähnliche Punkt-zu-Punkt-Verbindungen zwischen den parallel arbeitenden Prozessoren (8) zu softwaremäßiger Objektanalyse aufweist.

2. Bildverarbeitungssystem nach Anspruch 1,
**gekennzeichnet durch**
eine hardwaremäßige Filterung in einem Datenfilter (30) mit Pixel-Selektor (32) und ihm nachfolgender Intensitäts-Schwellwertstufe (34) sowie mit einer Musterrand-Grandientenstufe (36) zum Gewinnen einer Zeileninformation (39), mit der ein Merkmalsextraktor (31) gespeist wird, in dem ein Merkmals-Längencodierer (40) mit nachfolgendem Objektcodierer (42) zur Objektsegmentierung vorgesehen ist.

3. Bildverarbeitungssystem nach Anspruch 1 oder 2,
**dadurch gekennzeichnet**,
daß wenigstens einer der Module (12) auch mit der Video-Eingangsstufe (16) ausgestattet ist.

4. Bildverarbeitungssystem nach Anspruch 3,
**dadurch gekennzeichnet**,
daß es eine Video-Eingangsstufe (16) mit prozessor-gesteuertem wechselseitigem Selbstabgleich ihrer Kamerakanäle aufweist.

5. Bildverarbeitungssystem nach einem der vorangehenden Ansprüche,
**dadurch gekennzeichnet**,
daß die ikonische Bildverarbeitung im Modul (12) in feldprogrammierbaren Standard-Logikschaltungen (FPGAs) erfolgt, die, ohne Hardware-Eingriffe, von einem PC (14) aus aufgabenspezifisch parametrierbar sind.

6. Bildverarbeitungssystem nach einem der vorangehenden Ansprüche,
**dadurch gekennzeichnet**,
daß im Merkmalsextraktor (31) Längencodes (41) mit Merkmalsinformationen und Objektcodes (43) verknüpft sind.

7. Bildverarbeitungssystem nach Anspruch 6,
**dadurch gekennzeichnet**,
daß bei in aufeinanderfolgenden Videozeilen zusammenwachsenden Objektteilen einer der ursprünglich vergebenen Objektcodes (43) durch den anderen ersetzt wird.

8. Bildverarbeitungssystem nach Anspruch 6,
**dadurch gekennzeichnet**,
daß ersetzte Objektcodes (43) in nachfolgenden Zeilen nicht mehr auftreten und so im Prozessor (8) die Objektlistenverwaltung auf einfach verkettete Listen reduziert ist.

9. Bildverarbeitungssystem nach Anspruch 6, 7 oder 8,
**dadurch gekennzeichnet**,
daß im Merkmalsextraktor (31) für eine rückwirkende Korrektur schon vergebener Objektcodes (43) längencodierte Zeileninformationen (39) von einer zurückliegenden Videozeile so verschränkt in einem Registerfeld (37) abgespeichert sind, daß sie als serieller Datenstrom ausgelesen und nach Modifikation ihrer Objektcodes (43) wieder zwischengespeichert werden, ehe sie in Form von segmentierten Bilddaten (26) zur Software-Objektanalyse an das Prozessor-Netzwerk (28) ausgegeben werden.

10. Bildverarbeitungssystem nach einem der vorangehenden Ansprüche,
**dadurch gekennzeichnet**,
daß der softwaremäßigen Objektanalyse im Prozessor-Netzwerk (28) zusätzlich zu den objektsegmentierten Bilddaten (26) die vollständigen Grauwertinformationen der digitalen Videodaten (21) oder der gefilterten Zeileninformationen (39) übergeben werden.
